# EUROPÄISCHE PATENTANMELDUNG

(11) **EP 2 186 594 A1**
(43) Veröffentlichungstag der Anmeldung: **19.05.2010**
(21) Anmeldenummer: 08019755.1
(22) Anmeldetag: 12.11.2008
(51) Int. Cl.: B23K 26/06, B23K 26/067, B23K 26/20, B23K 26/34

(54) **Verfahren und Vorrichtung zur Vorwärmung beim Schweißen unter Verwendung eines zweiten Laserstrahles**

(71) Anmelder: Siemens Aktiengesellschaft, 80333 München (DE)
(72) Erfinder: Anton, Reiner Dr., 47228 Duisburg (DE); Ressel, Christian, 54314 Zerf (DE); Seeger, Dirk Martin Dr., 13509 Berlin (DE)

(57) **Zusammenfassung**

Das erfindungsgemäße Verfahren und die erfindungsgemäße Vorrichtung weisen Mittel (10) auf, die es ermöglichen, ebenfalls zu einem ersten Laserstrahl (16) einen zweiten Laserstrahl (19) auszusenden, der das Bauteil (4) vorwärmen kann, so dass keine aufwändigen Heizschleifen mehr verwendet werden.

## Beschreibung

Die Erfindung betrifft ein Verfahren zum Vorwärmen eines Bauteils beim Schweißen sowie eine Vorrichtung dafür.

Bei Schweißprozessen bei Raumtemperatur kommt es oft zur Rissbildung, so dass die Bauteile bei erhöhter Temperatur bearbeitet werden, um solche Risse durch thermische induzierte Effekte zu reduzieren.

Die Vorwärmung des Bauteils erfolgt oft durch induktive Erwärmung, wobei die entsprechenden Heizschleifen dem Bauteil angepasst werden müssen. Dies ist sehr aufwändig.

Es ist daher Aufgabe der Erfindung dieses Problem zu überwinden und eine vereinfachte Lösung zu erzielen.

Die Aufgabe wird gelöst durch ein Verfahren gemäß Anspruch 1 und eine Vorrichtung gemäß Anspruch 8.

In den Unteransprüchen sind weitere vorteilhafte Maßnahmen aufgelistet, die beliebig miteinander kombiniert werden können, um weitere Vorteile zu erzielen. Es zeigen:
- Figur 1, 2: Vorrichtung zum Schweißen mit einer Vorwärmung,
- Figur 3: eine Gasturbine,
- Figur 4: schematisch eine Turbinenschaufel und

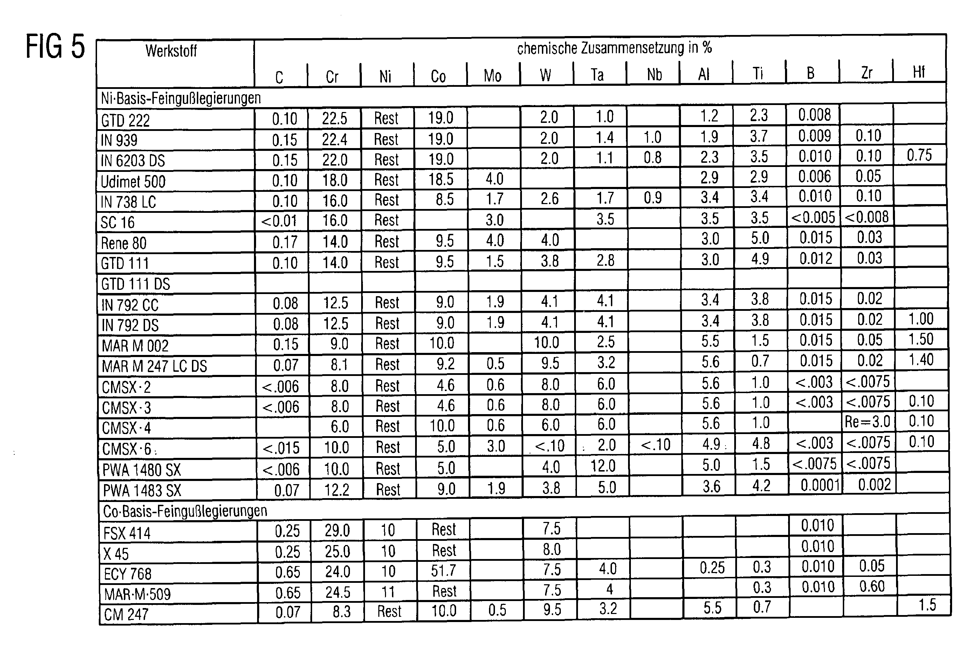

- Figur 5: Liste der Superlegierungen.

Die Beschreibung und die Figuren stellen nur Ausführungsbeispiele dar.

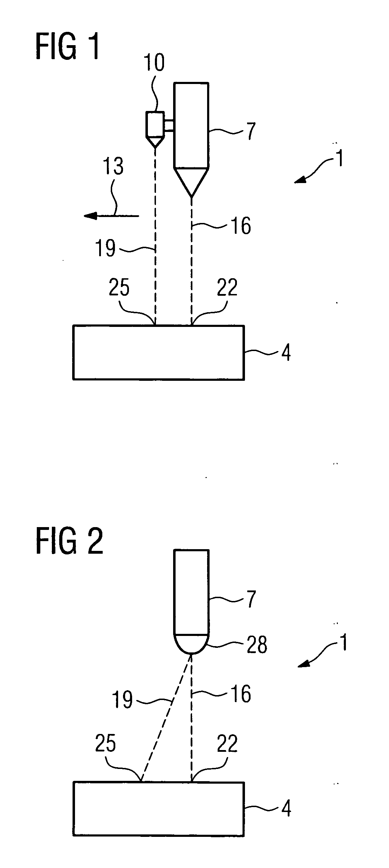

Figur 1 zeigt eine Vorrichtung 1, die ein Schweißgerät 7, insbesondere einen Laser 7 aufweist, der zum Schweißen eines Bauteils 4 benötigt wird.

Dies kann insbesondere ein Umschweißen oder ein Auftragsschweißen (durch Pulver, Drahtzufuhr, o. ä.) sein. Ebenso kann die Vorrichtung 1 bei einem Verbinden von zwei Werkstücken zu einem Bauteil verwendet werden.

Die zu schweißende Stelle auf dem Bauteil 4 ist mit 22 gekennzeichnet. Dort 22 trifft der Schweißstahl 16 des Schweißgerätes 7, insbesondere des ersten Lasers 7 auf, also vorzugsweise ein erster Laserstrahl 16.

Die Vorrichtung 1 weist vorzugsweise einen zusätzlichen zweiten Laser 10 zur Vorwärmung des Substrats 4 auf, der mittels eines separaten Laserstrahls 19 eine Stelle 25 bestrahlt, die von der Stelle 22 verschieden ist und die unmittelbar anschließend geschweißt wird, wenn der Laser 7 in einer Verfahrrichtung 13 verfährt. Durch die Bestrahlung mit dem zweiten Laserstrahl 19 wird die Stelle 25 vorgewärmt, aber nicht an- oder aufgeschmolzen.

Die Stelle 25 liegt also ausgehend von der Stelle 22 in der Verfahrrichtung 13. Der zweite Laser 10 weist gegenüber dem Laser 7 vorzugsweise eine geringere Laserleistung auf.

Vorzugsweise ist der zweite Laser 10 direkt an dem Schweißgerät 7, vorzugsweise an dem ersten Laser 7 befestigt. Andere Möglichkeiten sind denkbar.

Figur 2 zeigt eine weitere Ausgestaltungsmöglichkeit der Vorrichtung 1.

Der Laser 7 kann durch eine nicht näher dargestellte Vorrichtung 28 (Optik) gleichzeitig zwei Laserstrahlen aussenden oder nacheinander Laserstrahlen auf die zu schweißende Stelle 22 und die vorzuwärmende Stelle 25 richten. Dabei ist der Laser 7 vorzugsweise so ausgestaltet, dass die Laserleistung entsprechend der zu bestrahlenden Fläche 22, 25 angepasst ist, d.h., wenn der zweite Laserstrahl 19 auf die Stelle 25 trifft, der Laserstrahl 19 eine geringere Leistung aufweist oder die Bestrahlungszeit kürzer ist, um eine geringere Leistung für die lokale Vorwärmung des Substrats 4 zu erzielen.

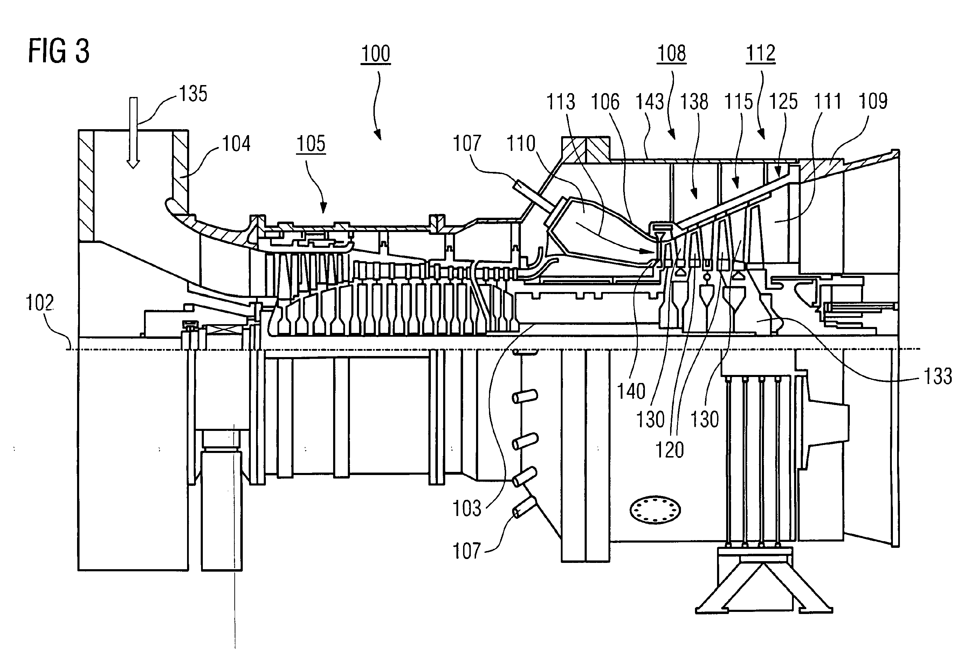

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

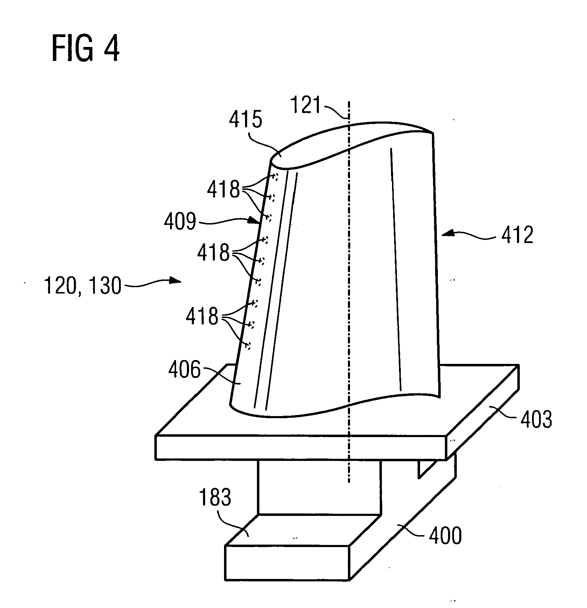

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Vorwärmung eines Bauteils (4) bei einem Schweißverfahren,
wobei mittels eines Schweißstrahls (16)
ein Bauteil (4) an einer Schweißstelle (22) geschweißt wird,
insbesondere durch ein Laserschweißverfahren,
**dadurch gekennzeichnet, dass**
ein zweiter Laserstrahl (19) zusätzlich zu dem ersten Schweißstrahl (16) verwendet wird,
um das Bauteil (4) an einer noch zu schweißenden Stelle (25) vorzuwärmen, aber nicht zu schweißen.

2. Verfahren nach Anspruch 1,
bei dem ein erster Laser (7) mit einem ersten Laserstrahl (16) zum Schweißen verwendet wird.

3. Verfahren nach Anspruch 1,
**dadurch gekennzeichnet, dass**
ein zweiter Laser (10) verwendet wird,
um den zweiten Laserstrahl (19) zu erzeugen.

4. Verfahren nach Anspruch 1, 2 oder 3,
**dadurch gekennzeichnet, dass**
der zweite Laser (10) direkt an dem Schweißgerät (7) oder dem ersten Laser (7) befestigt ist.

5. Verfahren nach Anspruch 1 oder 2,
**dadurch gekennzeichnet, dass**
nur ein Laser (7) zum Schweißen und Vorwärmen verwendet wird,
der (7) durch eine entsprechende Vorrichtung (28) zwei verschiedene Laserstrahlen (16, 19) aussenden kann.

6. Verfahren nach Anspruch 1, 2, 3, 4 oder 5,
**dadurch gekennzeichnet,**
**dass** das Schweißverfahren ein Auftragsschweißen ist, insbesondere ein Pulverauftragsschweißen oder Schweißen mit Drahtzufuhr.

7. Verfahren nach Anspruch 1, 2, 3, 4 oder 5,
**dadurch gekennzeichnet,**
**dass** das Schweißen ein Umschweißen darstellt.

8. Vorrichtung zum Schweißen mit einer Vorwärmung eines Bauteils (4)
mittels eines Schweißgerätes (7),
insbesondere eines ersten Lasers (7),
der (7) das Bauteil (4) an einer Schweißstelle (22) schweißen kann,
sowie Mittel (10, 28),
die zusätzlich zu einem ersten Schweißstrahl (16) einen zweiten Laserstrahl (19) auf das Bauteil (4) an eine zu schweißende Stelle (25) aussenden kann,
um es an dieser Stelle (25) vorzuwärmen,
aber nicht zu schweißen.

9. Vorrichtung nach Anspruch 8,
**dadurch gekennzeichnet, dass**
die Vorrichtung (1) einen zweiten Laser (10) aufweist.

10. Vorrichtung nach Anspruch 8 oder 9,
**dadurch gekennzeichnet, dass**
der zweite Laser (10) direkt an dem Schweißgerät (7) oder dem ersten Laser (7) befestigt ist.

11. Vorrichtung nach Anspruch 8 oder 10,
bei dem das Schweißgerät (7) ein Laser ist.

12. Vorrichtung nach Anspruch 11,
die nur einen Laser (7) aufweist.

13. Vorrichtung nach Anspruch 12,
das eine Vorrichtung (28), insbesondere eine Optik (28) aufweist,
die es ermöglicht mit einem Laser (7) zwei verschiedene Laserstrahlen (16, 19) zu erzeugen.
